(19)

**Europäisches Patentamt**
**European Patent Office**
**Office européen des brevets**

(11) **EP 3 715 782 B1**

(12) **EUROPEAN PATENT SPECIFICATION**

(45) Date of publication and mention
of the grant of the patent:
**05.07.2023 Bulletin 2023/27**

(21) Application number: **19165822.8**

(22) Date of filing: **28.03.2019**

(51) International Patent Classification (IPC):
*G01B 21/14* (2006.01)   *G01B 21/20* (2006.01)
*G01B 11/24* (2006.01)

(52) Cooperative Patent Classification (CPC):
**G01B 21/14; G01B 11/24; G01B 21/20**

(54) **METHOD FOR SLOT INSPECTION**

VERFAHREN ZUR SCHLITZINSPEKTION

PROCÉDÉ D'INSPECTION DE FENTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.09.2020 Bulletin 2020/40**

(73) Proprietor: **Nikon Metrology NV
3001 Leuven (BE)**

(72) Inventor: **DELAERE, Koen
3001 Leuven (BE)**

(74) Representative: **De Clercq & Partners
Edgard Gevaertdreef 10a
9830 Sint-Martens-Latem (BE)**

(56) References cited:
**KR-A- 20170 066 768   US-A1- 2014 157 610**

• **GREBAN ET AL: "Influence of the structure of
blanked materials upon the blanking quality of
copper alloys", JOURNAL OF MATERIALS
PROCESSING TECHNOLOGY, ELSEVIER, NL,
vol. 186, no. 1-3, 7 March 2007 (2007-03-07), pages
27-32, XP005912288, ISSN: 0924-0136, DOI:
10.1016/J.JMATPROTEC.2006.11.226**
• **TEKINER Z ET AL: "An experimental study for the
effect of different clearances on burr,
smooth-sheared and blanking force on
aluminium sheet metal", MATERIALS AND
DESIGN, LONDON, GB, vol. 27, no. 10, 1 January
2006 (2006-01-01), pages 1134-1138,
XP027891373, ISSN: 0261-3069 [retrieved on
2006-01-01]**

EP 3 715 782 B1

## Description

### Field of the invention

Provided herein is a method for inspecting for a workpiece, the workpiece comprising one or more slots for inspection.

### Background to the invention

The manufactory of products in some cases requires the creation of a slot or hole in various shapes and sizes in a large variety of materials, e.g., metals, polymers, carbon, etc. These slots or holes may have been formed using numerous production techniques, e.g., punching, drilling, etc. One purpose of these slots can be to allow mechanical assembly in a later stage of production by means of connector elements such as fasteners, e.g., screws, bolts, nuts, etc., that join or affix two or more objects together into the final product.

In general, the slot size has to be large enough to allow a different part to pass through it, or to fit tightly. For several products an optimal assembly is an essential requirement for their warranted functionality, and relies heavily on a proper matching between the position and diameter of the slot, and the position and diameter of the preferred fastener. A mismatch between these elements could cause unwanted friction during operation of the product and potentially result in a structural weakness that would endanger the correct functionality of the product.

For some industries the room for error is so small that every small mismatch could lead to unforeseen consequences, perhaps so far as to even endanger the safety of any person using said product. For these industries, e.g., automotive, airline, etc., proper slot position and size inspections are therefore of utmost importance for the industrial production process.

To guarantee a high quality of assembly the slot position and size inspections are commonly performed by a human expert. The speed and accuracy of the expert depends largely on the production method used, the material thickness, experience of said expert, etc. However, to manually inspect each slot separately would turn the inspection into a very time-consuming, cumbersome and costly process. Therefore, to keep up with the narrow production time-frames of said industries the inspection of slot position and size is often limited to using samples taken at a single fixed depth value, and the slot size is then assumed to be similar along the depth of the slot. For example, for a sheet of metal with a material thickness of 1 mm, the inspection might happen at a single fixed depth of 0.5 mm counted from the workpiece surface (base plane).

However, for certain slot production methods the slots can show a non-constant diameter along the depth of the slot. This variance will significantly diminish the inspection reliability if only a single value or fixed range is assumed for the inspection depth. Furthermore, other large-scale deformations in the vicinity of the slot or across the product surface, whether caused by the production method or by other factors, can cause the reference zero-depth plane, *i.e.*, surface (base plane), to shift during production, thereby further decreasing the reliability of the slot position and size inspection. For these reasons, the narrowest part of the slot has to be inspected. However, for some production methods, such as holes punched in a sheet of metal, it is not known beforehand at which depth the slot is narrowest.

Greban et al in "Influence of the structure of blanked materials upon the blanking quality of copper alloys", Journal of Materials Processing Technology, vol. 186, no. 1-3, 2007, pages 27-32, discloses a measurement of a part of a slot by scanning electronic microscopy, which is not suitable for most industrial (*e.g.* part assembly) applications.

Tekiner Z et al in "An experimental study for the effect of different clearances on burr, smooth-sheared and blanking force on aluminum sheet metal", Materials and Design, vol. 27, no. 10, 2006, pages 1134-1 138, discloses a measurement of a part of a slot by an optical microscope, which is also not suitable for most industrial applications.

KR 2017 0066768 discloses a camera for photographing the side wall of a hole, in which the rotating camera unit is placed within the passage of the hole, and the images captured are later combined into a single image. The disclosed apparatus requires a complicated set-up and is time consuming.

US 2014/0157610 discloses a metrology system for the measurement of a slot. For automated slot inspection, it cannot be readily determined which values represent the slot width because of variations along the slot depth, and there is no disclosure of how inspection can be automated.

Accordingly, there is a need in the art for a new technology to perform the slot inspection methods in a quick, reliable and cost-effective manner. There is also a need to automatically perform the slot inspection methods. There is also a need to combine the determination and inspection of the slot position and size. There is also a need to maintain the high quality and accuracy standard set by the industry. There is also a need to operate within the narrow production time-frames.

**EP 3 715 782 B1**

## Summary of the invention

A method is presented designed for inspecting a workpiece comprising one or more slots for inspection.

According to an aspect of the invention according to claim 1, the method allows for inspecting for a workpiece (100), the workpiece (100) comprising a slot (110) with a proximal end (P) and a distal end (D), the method comprising:

- receiving a dimensional model (210) of at least part of the workpiece comprising at least part of the slot (110); and
- determining a burnish region (220) of the slot (110) that is a continuous region having an essentially constant profile from the dimensional model (210)

wherein determining the burnish region (220) comprises:

- defining in the dimensional model (210) an entry region (212), and an inner mantle (214) from the dimensional model (210), wherein the entry region (212) is located at the proximal end (P) of the slot; and the inner mantle (214) is distal to the entry region (212), wherein the inner mantle (214) is used to identify the burnish region (220),
- subdividing the inner mantle (214) into a plurality of slices (216) along the slot axis (114) each of a predetermined height, wherein for at least two slices, preferably all slices (216a to 216e) a plane geometric shape (218a to 218e), preferably a circle, is generated and fitted to each of the respective slices (216a to 216e), preferably wherein the fitted plane geometric shapes (FPGSs) (218a to 218e) are each disposed essentially perpendicular to the slot axis (114), and preferably wherein the fitted plane geometric shapes (FPGSs) (218a to 218e) are each fitted inside a peripheral boundary of the respective slices (216a to 216e).

One or more properties of the burnish region (220) may include dimension of the burnish region (220). One or more properties of the burnish region (220) may include position of the burnish region (220). The method may include determining from one or more properties of the burnish region (220) including dimension and/or position of the burnish region (220).

In some preferred embodiments, the slot (110) is an essentially cylindrical slot, preferably comprising a slot axis (114) that is a central longitudinal axis.

In some preferred embodiments, the step of determining the burnish region (220) comprises determining from the dimensional model (210) an upper burnish limit A and a lower burnish limit B measured from a base plane (102) that contacts the opening to the slot at the proximal end, between which upper burnish limit A and lower burnish limit B the slot profile is essentially constant and essentially minimal compared with a remainder of the slot (110).

In some preferred embodiments, the method comprises the step of comparing a parameter R related to the size of a FPGS (218c), either between neighbouring FPGSs (218b or d) or within the entire population of all FPGSs (218a to 218e), and wherein a reference slice with index r is obtained from the FPGSs (218d) by comparing a parameter R related to the size of the FPGS (218).

In some preferred embodiments, the method comprises the step of evaluating the FPGS (218) either sequentially against one or more other FPGSs (218) or as an entire population of FPGSs (218).

In some preferred embodiments, the method comprises the step of determining a burnish region (220) comprises starting from a slice (216) at the proximal end (P), and moving towards the distal end (D), and continuing as long as the parameter R in respect of the present FPGS (218) is smaller than the parameter R of the previous FPGS (218), optionally wherein said present slice (216) is labelled as a reference slice with index r.

In some preferred embodiments, the method comprises the step of calculating the Outlierness for each FPGS (218), preferably wherein the Outlierness of a FPGS (218) with index k is calculated as the ratio between the difference in parameter R related to the size of the FPGS (218) between a neighbouring FPGS (218b) with index k-1 and the current FPGS (218c) with index k to some reference value of the standard deviation skA of the distance of the measured points to the FPGS (218):

$$\text{Outlierness} = (R[k\text{-}1]\text{-}R[k])/skA;$$

preferably comprising the step of evaluating the FPGSs (218) from the FPGS (218) with index r to the proximal end (P) and calculating the Outlierness for each FPGS (218); wherein the first FPGS (218) to have an Outlierness greater than a predefined positive threshold is labelled as the FPGS (218) with upper burnish limit A as measured from the base plane (102).

In some preferred embodiments, the method comprises the step of evaluating the FPGSs (218) from the proximal end (P) to the distal end (D) and calculating the Outlierness for each FPGS (218), for example starting from the FPGS (218) with upper burnish limit A; wherein the first FPGS (218) to have an Outlierness smaller (more negative) than a predefined negative threshold is labelled as the FPGS (218) with lower burnish limit B as measured from the base plane (102).

In some preferred embodiments, the burnish region (220) is defined as the region between upper burnish limit A and lower burnish limit B.

In some preferred embodiments, the method further comprises the step of measuring the workpiece (100) with a dimensional measurement device (300) in order to generate the dimensional model (210), optionally wherein the dimensional measurement device (300) comprises a laser scanner and wherein the dimensional model (210) comprises a discrete set of data points.

According to a second aspect of the invention, the method allows for inspecting a workpiece (100), the workpiece (100) comprising a plurality of slots (110), comprising the steps of:

- performing the method as described herein on a first slot to obtain the burnish region (220) of the slot; and
- inspecting the profile of one or more slots (110) in the plurality of slots (110) at a depth that falls within the burnish region of the first slot.

According to a third aspect of the invention, a system is provided for inspecting for a workpiece (100), configured for performing the method according to a first or a second aspect of the invention.

According to another aspect, a system is provided for inspecting for a workpiece (100), the system comprising a computer configured for performing the method as described herein, and a dimensional measurement device (300) for measurement of the workpiece (100) for generation of the dimensional model (210) as described herein.

In some preferred embodiments, the system comprising a dimensional measurement device (300) and a computer.

In some preferred embodiments, the dimensional measurement device (300) comprises a laser scanner and wherein the dimensional model (210) comprises a discrete set of data points.

According to a fourth aspect of the invention, a computer program or computer program product having instructions which when executed by a computing device or system cause the computing device or system to perform the method according to a first or a second aspect of the invention.

**Figure Legends**

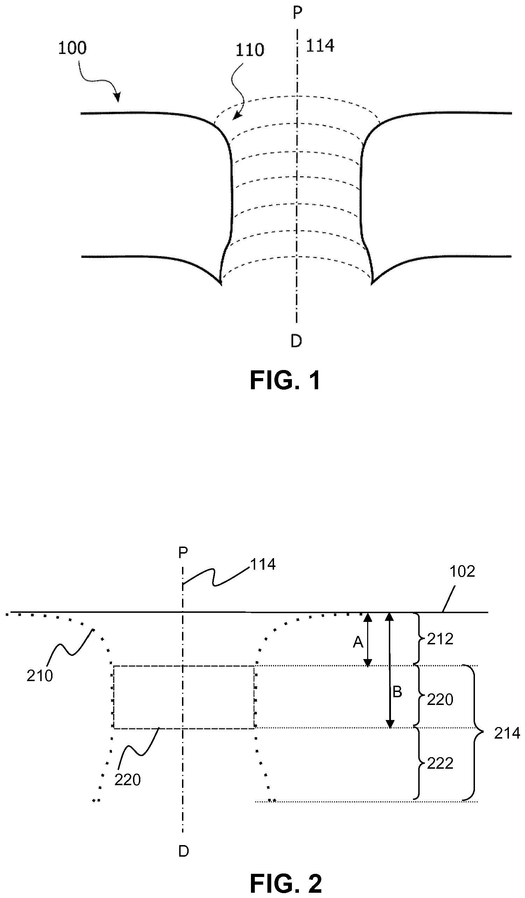

**FIG.1:** shows a schematic cross-section of a slot (110), comprising a central slot axis (114), produced in a workpiece (100). The proximal end (P) is the area in space nearest to the workpiece surface side on which the slot production technique was used; and the distal end (D) on the opposing side.

**FIG.2:** shows a schematic diagram of a dimensional model (210) formed with a point cloud obtained from measured data, wherein the burnish region (220) is defined by an upper burnish limit A and a lower burnish limit B measured from the base plane (102). Also indicated are the entry region (212) and the inner mantle (214).

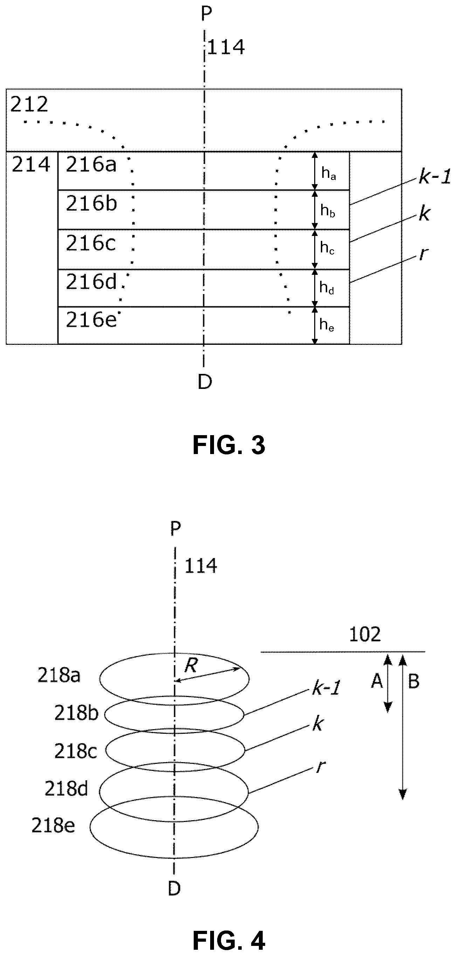

**FIG.3:** shows a schematic block diagram of the division of the slot's inner mantle (214) into slices (216a to 216e) each with a fixed height ($h_a$ to $h_e$), each slice (216a to 216e) is assigned an index $k$. Situated above the inner mantle (214) is the entry region (212).

**FIG.4:** shows a schematic diagram of the fitted plane geometric shapes (FPGS) (218a to 218e) based on corresponding slices, each FPGS is assigned an index $k$. As part of the method one of the FPGS is assigned an index $r$ (FPGSr). Additionally, each FPGS is assigned a parameter $R$ related to the size of a FPGS (218a to 218e); for example, the radius of a circular slot or the width of a square slot.

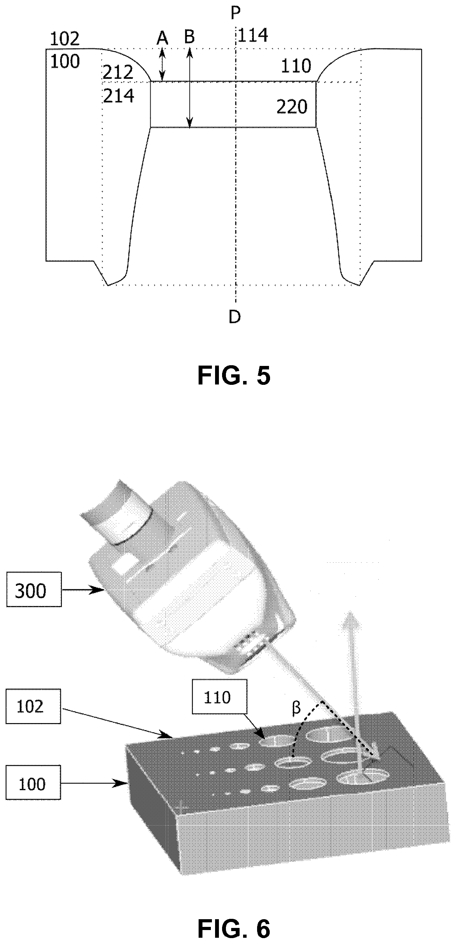

**FIG.5:** shows a schematic block diagram of the regions characterising a slot (110) produced in a workpiece (100): a base plane (102), a burnish region (220) defined by an upper burnish limit A and a lower burnish limit B, an entry region (212) and an inner mantle (214), a central slot axis (114), a proximal end (P) and a distal end (D).

**FIG.6:** shows a schematic of the dimensional measurement device (300) measuring the slot (110) profile produced on a workpiece (100) while positioned at an angle $\beta$ with the base plane (102).

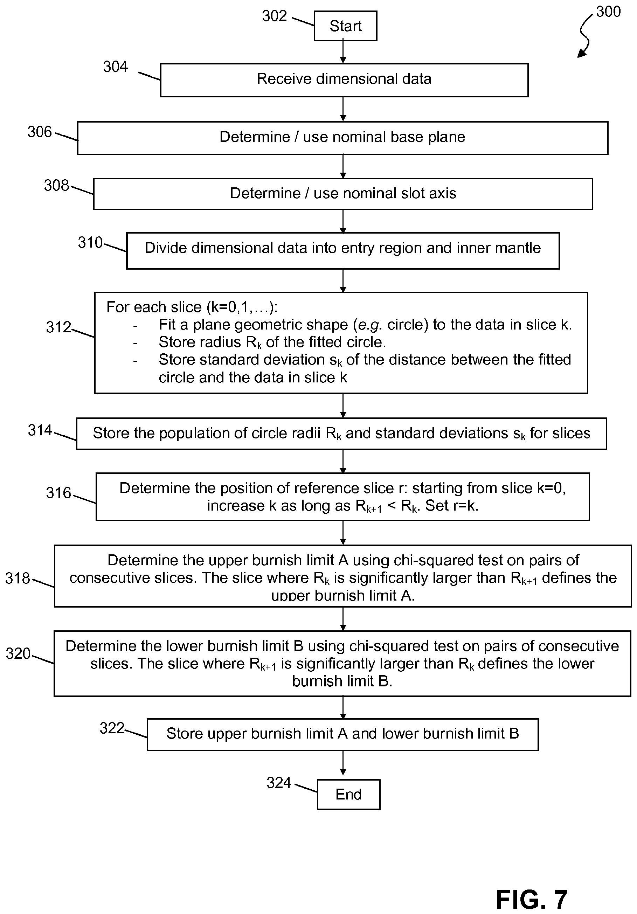

**FIG. 7:** an exemplary flow chart (300) of a method of the invention.

**Detailed description of invention**

Before the present system and method of the invention are described, it is to be understood that this invention is not limited to particular systems and methods or combinations described, since such systems and methods and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-10% or less, preferably +/-5% or less, more preferably +/-1 % or less, and still more preferably +/-0.1 % or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, *e.g.*, any $\geq 3$, $\geq 4$, $\geq 5$, $\geq 6$ or $\geq 7$ etc. of said members, and up to all said members.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

In the present description of the invention, reference is made to the accompanying drawings that form a part hereof, and in which are shown by way of illustration only of specific embodiments in which the invention may be practiced. Parenthesised or emboldened reference numerals affixed to respective elements merely exemplify the elements by way of example, with which it is not intended to limit the respective elements. It is to be understood that other embodiments may be utilised and structural or logical changes may be made without departing from the scope of the present invention. The following detailed description, therefore, is not to be taken in a limiting sense, and the scope of the present invention is defined by the appended claims.

Provided herein is a method to determine the minimum and maximum depth (interval) between which the profile of a slot or hole is at essentially constant. This interval is herein referred to as the burnish region (220).

The invention relates to a method for inspecting for a workpiece (100) according to claim 1, the workpiece (100) comprising a slot (110) with a proximal end (P) and a distal end (D). The method comprises the steps of:

- receiving a dimensional model (210) of at least part of the workpiece comprising at least part of the slot previously measured with a dimensional measurement device (300); and
- determining from the dimensional model (210) a burnish region (220) of the slot (110), the burnish region (220) having an essentially constant profile. One or more properties of the burnish region (220) determine at least a part of the result of the inspection. A property of the burnish region may include dimension, position, or orientation of the burnish region (220). The properties of the burnish region may include dimension and/or position, and optionally orientation of the burnish region (220). Preferably, the method is a computer-implemented method.

An inspection of a workpiece is understood in the art and it refers to a process of dimensional measurement of one or more features (*e.g.* slot) of a manufactured workpiece and comparison with reference values (*e.g.* CAD drawing). At least a part of a result of the inspection is based on the dimensional measurement, and in particular on the burnish region (220) described herein. The result of the inspection is used determine manufacturing conformity.

As used herein the term "proximal end" (P) refers to an area in space nearest to the workpiece surface side from which a slot production technique was used, i.e., the side from which the workpiece deformation initialised to form a slot (110). Usually the proximal end is end of the slot from which measurements by dimensional measurement device are acquired.

As used herein the term "distal end" (D) refers to the opposite side from *P*, i.e., the area in space furthest from the workpiece surface side on which the slot production technique was used.

The dimensional model (210) of the slot includes at least part of the slot itself, preferably all of the slot. It also includes a region of the workpiece surface (100) surrounding the P end of the slot.

As used herein the term "base plane" (102) refers a fictive flat surface or plane essentially parallel to the workpiece surface or to the dimensional model of the workpiece around the proximal end of the slot. In some embodiments the dimensional model may be used to determine the base plane. Preferably, the dimensional model contains a sufficient amount of the workpiece surface in the vicinity of the slot; more preferably up to 2 mm away from the slot circumference; most preferably up to 5 mm away from the slot circumference. In some embodiments the user may use alternative methods to establish the position of the base plane; for example, measurements by other apparatus or products, manual inspections, pre-defined definitions or data, or the like.

According to the present invention, the "burnish region" (220) refers to a continuous region of the slot, in particular in a slot's inner mantle (214) showing an essentially constant profile.The essentially constant profile refers to an essentially unvarying change in shape and size of profiles along a slot axis (114) *i.e.* along a continuous depth of the slot. The burnish region may be further defined as containing essentially minimal profile of the slot, referring to size of profiles in a continuous region along the slot axis (114) that are the smallest compared with other profiles within the slot. The burnish region (220) may be further defined as containing essentially constant profiles for a maximum continuous depth, meaning that the burnish region is the longest continuous region along a slot axis (114) having a essentially constant profile and optionally an essentially minimal profile. A property of the burnish region may include dimension, position, or orientation of the burnish region (220). The properties of the burnish region may include dimension and/or position, and optionally orientation of the burnish region (220). The dimension of the burnish region refers to the size of the burnish region, for instance its height and/or profile size and/or shape. The position of the burnish region refers to the position of the burnish region within the slot. The orientation of the burnish region refers to an angle adopted by a slot axis of the slot.

As used herein, the term "profile" means a transverse planar cross-section across the slot (110). By transverse, it is meant at a position perpendicular to a slot axis (114) of the slot. Typically a cylindrical slot will provide a circular profile. An essentially constant profile of a cylinder would have an essentially constant diameter. Herein the burnish region (220) is frequently referred to as having a profile in view that it is essentially constant in size and shape along the slot axis (114).

The terms used here to describe workpiece, such as slot, proximal end, distal end, burnish region, as terms described later below such as entry region, fracture region, and inner mantle, apply also to the same features of the dimensional model of the slot.

As used herein the term "dimensional measurement device" (300) refers to a hardware system or device that can measure the dimensions of the actual workpiece (100) including the slot (110). It outputs signals corresponding to the dimensional measurements. It may comprise a contact probe or a non-contact probe. The contact probe or a non-contact probe may be mounted on a localiser such as a co-ordinate measurement machine. A non-contact contact probe may include an optical non-contact probe. Typically, an optical non-contact probe comprises at least one light source and at least one optical detecting element.

In some preferred embodiments, the dimensional measurement device (300) comprises a laser scanning probe. In some embodiments, the dimensional measurement device (300) comprises a laser scanning probe configured to measure the slot, in particular the slot's inner mantle (214). A main advantage of using dimensional measurement device (300) comprising a laser scanning probe is the combination of speed and accuracy. By avoiding mechanical contact with the workpiece, a slot (110) created in a soft and/or fragile material can be recorded without risk of damaging the slot surface and/or profile. Moreover, a different laser light frequency can be chosen should any technical issues arise with the material surface, i.e., reflectivity, absorption, etc. By using a combination of lasers lines at different angles the whole slot surface area can be recorded simultaneously, with a minimum of blind spots. A.

In some preferred embodiments, the laser scanning probe is a laser line scanner, preferably a 2-sided or 4-sided line scanner. Preferably, the scanner is a laser line scanner, containing an optical sensor for capturing one plane corresponding to one channel. Examples of laser line scanners include, LC60Dx, LC50Cx, LC15 (Nikon), and the like. Alternatively, the laser line scanner is a cross scanner containing 2 or more (e.g. 3) optical sensors for simultaneously capturing two or more (e.g. 3) scanning planes corresponding to 2 or more (e.g. 3) channels. An example of a cross scanner is a XC65D(-LS) (Nikon).

Typically, a laser line scanner projects a stripe onto the workpiece which stripe has a length known as a stripe distance when the laser line scanner is at a distance from the workpiece corresponding to a focal plane of the optical sensor. Preferably, the stripe distance for a line scanner may range between 0.001 mm and 5mm; more preferably between 0.005 mm and 3 mm; most preferably between 0.010 mm and 2 mm. Preferably, the stripe distance for a cross scanner may range between 0.005 mm and 3 mm; more preferably between 0.100 mm and 0.500 mm; more preferably between 0.200 mm and 0.230 mm.

In some embodiments, a projected light plane emitted by the dimensional measurement device (300) that is a laser line scanner is positioned at an angle β with a workpiece, wherein a (surface) axis coinciding with the base plane is defined as the reference, i.e., 0°, and the slot axis (114) perpendicular on the base plane is defined as 90°. Preferably, the angle β between the dimensional measurement device and the reference axis comprises any angle β between 1° to 90°. More preferably the angle β is between 50° to 75°. Most preferably, the angle β is between 55° to 70°. It is possible that the slot axis is not perpendicular to the base plane, for example at an angle β = 70°. In that case the preferred laser scanner angles shift accordingly to preserve visibility of the slots inner mantle.

An advantage of setting a dimensional measurement device (300) at an angle β smaller than 90° is to enable a better capture of the slot's inner mantle (214) in a scan. This way, one side of the inner mantle is captured in a 1-sided scan (North). The opposite side of the inner mantle of the same slot can be scanned from the other side, i.e., the side where β is between 90° and 180°. By combining two scans from opposing sides, a 2-sided scan may be obtained (North and South). Rotating the laser scanner around the axis of the slot then allows for a 4-sided scan (North, South, West and East).

Preferably, the scan is performed from multiple angles (2-sided or 4-sided) as to capture more of the slot's inner mantle (214) and thereby increase the accuracy of inspection, depending on the acquisition range and time of a dimensional measurement device.

In some embodiments a dimensional measurement device (300) may be rotated around a slot (110) or a workpiece, or alternatively, a workpiece may be rotated relative to a dimensional measurement device.

The maximum depth of the inner mantle as it is captured in the dimensional model depends on the configuration and limitations of the dimensional measurement device. For a laser scanner, it depends primarily on the spatial limits on the field of view of the scanner.

In some embodiments, two or more dimensional measurement devices (300) are positioned around a workpiece (100) in such a way that the dimensional measurement area is spread out on opposing angles compared to a slot axis (114) and/or opposing sides compared to a workpiece. By using a combination of two or more dimensional measurement devices (300) multiple angles can be captured simultaneously, thereby significantly increasing the accuracy of the line inspection, yet without increasing the acquisition time.

In some embodiments, a combination of two or more dimensional measurement device (300) can be used in series and/or in parallel to obtain more data, thereby increasing the accuracy of the dimensional measurement.

The dimensional model is a numerical model of at least part of the workpiece (100) comprising at least part of the slot. The dimensional model is typically acquired using the dimensional measurement device such as a laser scanner described elsewhere herein. The dimensional model preferably comprises at least the entry region and the burnish region of the slot. The dimensional model preferably comprises the entire slot. The dimensional model preferably includes an area of the workpiece surface surrounding the proximal end (P) of the slot; the aforementioned base plane (102) may be fitted to said area.

The base plane (102) fitting may be performed using any fitting technique, such as least-squares plane fitting, with or without outlier rejection.

As used herein the term "slot" (110) refers to an opening or hole made of a certain shape and a size in the workpiece created using a type of slot production technique. It comprises the terms cavity, groove, gap, or other openings and combinations thereof. In some preferred embodiments, the slot (110) is an essentially cylindrical slot. When the features of the slot are described, the description applies equally to the dimensional model of the slot.

When a slot is introduced into a workpiece, a number of depth wise deformation regions may be created. Closest to the proximal end of the slot is the "entry region" also known as the roll over depth. Typically, the entry region (cfr. **FIG. 2,** 212) has the widest diameter of slot at the proximal end, caused by force of the tool such as a punch on the workpiece. Immediately adjacent to the entry region and distal thereto is the "burnish region" as mentioned above also known as the burnish depth (cfr. **FIG. 2,** 220). The burnish region (220) is characterized by an essentially constant and essentially minimal size in the slot's inner mantle (214) and its corresponding profile. Immediately adjacent to the burnish region and distal thereto is the "fracture region" also known as the fracture depth (cfr. **FIG. 2,** 222). Typically the fracture depth has a non-constant profile that widens towards the distal end of the slot, and leads to an opening at the other side of the workpiece. Thus, above and below the burnish region (220) are typically regions with an increased rate of deformation, i.e., generally showing a higher structural variance and an increased or decreased profile size.

In some embodiments, the invention relates to methods for automated determination of the burnish region (220) as the region with essentially constant and essentially minimal size in the slot's inner mantle (214) and its corresponding profile. The burnish region (220) and fracture region together typically form the inner mantle (214). Calculations using the dimensional model (210) to determine the burnish region (220) may be performed using only the inner mantle region (214) while disregarding the entry region (212). In some preferred embodiments, the step of determining the burnish region (220) is performed by a computer.

The slot (110) preferably comprises a slot axis (114) that is a central longitudinal axis passing from the proximal *P* end of the slot to the distal *D* end of the slot (110). As used herein the term "slot axis" (114) preferably refers to an imaginary line that runs perpendicular to the base plane (102) through the central points of each slice (216) and/or the slot (110), from the proximal end *P* to the distal end *D*. The slot axis (114) is typically also present in the dimensional model (210) of the slot (110).

In some preferred embodiments, the workpiece (100) is a metal sheet, and the slot (110) is a punched hole. As used herein the term "workpiece" (100) refers to an object crafted from a material that comprises one or more slots (110) created using any type of slot production technique.

In some embodiments, the workpiece (100) comprises an object crafted from one or more materials that comprises one or more slots (110) within the body of the workpiece formed using one or more slot production technique. Preferably, the workpiece (100) comprises solid material. More preferably, the workpiece (100) comprises a material commonly used for industrial applications, e.g., metal, alloy, polymer, (reinforced) carbon, etc., and/or combinations thereof. The slot (110) may comprise any shape, width and depth. Preferably, the slot shape comprises a geometric element commonly used for industrial applications, e.g., circles, triangles, squares, stars, etc. Most preferably, the slot (110) has a circular (cylindrical) shape.

In some embodiments, the slot (110) is formed using a mechanical tool, a non-mechanical and/or a combination thereof slot production technique. Examples of mechanical tools comprise punching, drilling, broaching, sawing, cutting, shearing, and the like. Examples of non-mechanical tools include burning or freezing, and the like. More preferably, the slot (110) is formed using a slot production techniques commonly used for industrial applications, such as punching or drilling.

In some embodiments, the slot diameter may vary over a wide range depending on the industrial application, the workpiece (100) and the slot production technique. In principle, all slot dimensions are allowed according to some embodiments of the invention. For example, the slot diameter of slots (110) punched in a sheet of metal may easily vary between 10 mm to 100 mm; however, as will be appreciated by persons skilled in the art, slot (110) sizes which are narrower or wider may also be inspected using some embodiments of the invention.

The range of slot diameters, defined by the minimal and maximal diameter of the inspected slot, depends primarily on the (minimal and maximal) resolution of a dimensional measurement device. Consequently, the present method can easily be expanded to include other slot production techniques that create a slot (110) showing a smaller and/or larger diameter than the one described herein by enhancing the limitations of the operated dimensional measurement device, such as, fine tuning, calibrating, and/or upgrading.

The dimensional model (210) may be any type of three-dimensional model that numerically represents the measured slot, in particular the slot inner mantle. Examples of dimensional model include including point cloud or wire mesh.

Typically, the dimensional model comprises a discrete set of data points. This discrete set of data points may also be referred to as a "data point cloud" or "point cloud". As used herein the term "data" refers to a set of values of qualitative or quantitative variables that can be captured, measured, collected, analysed and reported. As used herein the term "point cloud" refers to a set of data points in a three-dimensional (3D) coordinate system acquired by a dimensional measurement device, preferably comprising the surface of the slot inner mantle (214). In some embodiments, all the data points obtained by the dimensional measurement device (300) representing the parameters of the surface of the slot's inner mantle (214) are stored on a storage device. Examples of storage device include hard drives, memory cards, cartridges, and the like; preferably, the storage device is part of a computer.

In some embodiments, a dimensional model (210) of a slot's inner mantle (214), i.e., representing a 3-dimensional profile of the surface of a slot's inner mantle (214), is formed using a processing device. Preferably, the processing device is a computer; more preferably, the processing and storage device are the same computer. Preferably, the dimensional model (210) forms an essentially cylindrically shaped profile to represent a slot's inner mantle (214).

In some embodiments, the dimensional model (210) may be displayed to the user using a visual interface. Optionally, other slot-related information may be displayed alongside and/or on top of the dimensional model (210). Examples of slot-related information include the slices (216), the burnish region (220), other regions, corresponding diameters, off-set values, etc. In some embodiments, the processing unit is connected to a display device capable of rendering the processed image, such as a monitor, display port, and other display elements.

In some preferred embodiments, the determining of the burnish region (220) comprises determining from the dimensional model (210) an upper burnish limit A and a lower burnish limit B. The upper burnish limit A and a lower burnish limit B are distances measured from the base plane (102), between which upper burnish limit A and lower burnish limit B the slot profile is essentially constant and essentially minimal. The upper burnish limit, A, is closer to the proximal *P* end of the slot, and the lower burnish limit B is further from the proximal *P* end of the slot.

According to the invention, the step of determining from the dimensional model (210) a burnish region (220) comprises defining in the dimensional model (210) an entry region (212), and an inner mantle (214), wherein: the entry region (212) is located at the proximal end (P) of the slot; and the inner mantle (214) is distal to the entry region (212), wherein the inner mantle (214) is used to identify the burnish region (220). The inner mantle (214) comprises the dimensional model (210) minus the entry region (212). In some preferred embodiments, the entry region (212) contains an entrance aperture through which the slot (110) was created.

According to the invention the entry region (212) is determined from the dimensional model (210). The entry region (212) is typically the zone where there is a high probability of workpiece (100) deformation, for example, mechanical rounding of the slot (110) edge, burrs, other kinds of damage, due to the production technique applied for making the slot (110), and also depending on the workpiece (100) material. As a result there may be a high probability of disturbances in the dimensional model (210), such as, optical blurring of sharp edges. The size of the entry region (212) may be determined partly by experience, and partly by characteristics of the dimensional measurement device (300) used. In some preferred embodiments, after defining the entry region (212), the corresponding data is discarded to avoid disturbing the inner mantle (214) inspection that is to follow.

In some preferred embodiments, the dimensional model (210) of the inner mantle (214) is subdivided into a plurality of parallel slices (**FIG. 3,** 216a to e) along the slot axis (114). The height of each slice (**FIG. 3,** $h_a$ to $h_e$) may be predetermined. The adjacent slices are preferably mutually contacting. Preferably each slice (216) is assigned an equal height. In **FIG. 3,** consider the line P-D as a coordinate axis. Each data point from the dimensional model is projected onto the coordinate axis P-D to obtain the axial coordinate of the data point. Each slice (**FIG. 3,** $h_a$ to $h_e$) corresponds to an interval of axial coordinates. Depending on the axial coordinate of a data point, that data point is assigned to the appropriate slice (binning), *i.e.* the slice that corresponds to the interval that contains the axial coordinate value of the data point. The division is preferably performed in a way that when all the slices (216) are stacked one over the other they essentially render the slot's inner mantle (214) within the dimensional model (210). Additionally, each slice (216a to e) may be assigned an index *k*, where the highest value of *k* is an integer equal to the total number of slices (216). The value of index k refers to the position of the slice (216) in the inner mantle (214).

The slices are preferably, but not necessarily, perpendicular to the slot axis. This is related to the fact that the slot axis itself is preferably, but not necessarily, perpendicular to the base plane.

The predefined height of the slice (216a to e) is a fraction of the total slot height or inner mantle height. The optimal height of the slice (216) may depend on many different factors, such as the noise, sampling density and inner mantle (214) coverage of the dimensional measurement device (300), on the surface condition of the workpiece, and/or also on the interaction between dimensional measurement device (300) and the workpiece (100), e.g., the optical characteristics of the inner mantle (214) versus the optical characteristics of a laser scanner.

Preferably, the height of the slice (216) may be at least twenty times smaller than the total slot (110) height or inner mantle (214) height. For example, for a slot (110) height of 1 mm when inspected by a laser scanner, a fixed slice (216) height of 0.05 mm would be preferred.

In some embodiments, the slice (216) height may be determined by experience from testing on a representative set-up.

In some embodiments, the slice (216) height may be determined by an algorithm that takes into account the entire height of the slot's inner mantle (214) and divides it by an integer, which can be predefined or can be determined by another an algorithm, to automatically determine the slice (216) height.

According to the invention, for at least two slices, preferably all slices (216a to 216e) a plane geometric shape (218a to 218e), preferably a circle, is generated and fitted to each of the respective slices (216) of the dimensional model (210). The FPGS may be any geometric shape, preferably circular. Each FPGS is planar. In some preferred embodiments, the fitted plane geometric shapes (FPGSs) (218a to 218e) are each disposed essentially perpendicular to the slot axis (114).

In some preferred embodiments, the FPGSs (218a to 218e) are each fitted inside a peripheral boundary of the respective slices (216a to e). Preferably, for one slice (e.g. 216a) only one FPGS (e.g. 218a) is fitted.

In some preferred embodiments, the FPGSs (218a to e) each have the same shape/form e.g. it may be circular for each slice for a given slot inner mantle (214); wherein in order to fit a plane geometric shape (218) to a slice (216a to e), the size of the plane geometric shape (218a to e) is scaled whilst maintaining the shape/form of the plane geometric shape (216a to e); such that the geometric centres of all the FPGSs (218) are mutually aligned along an axis 'ASA' which runs perpendicular to the slices. In some embodiments, the axis ASA will count as the actual measured slot axis.

Each of these fitted plane geometric shape (FPGS) can be assigned an index number *k*, with the total number of indexes equal to the total number of fitted slices (216a to e). Then, by comparing the distance of each surface point stored within the respective slice data to the corresponding fitted FPGS the standard deviation *s* for each FPGS (218a to e) may be obtained, defined as s[k].

In some embodiments, a minimum and a maximum depth encapsulating the burnish region are determined. The minimum depth corresponds to the position of the top slice and the maximum depth to the position of the bottom slice. In some preferred embodiments, the burnish region (220) is defined as the region between upper burnish limit A and lower burnish limit B.

In some embodiments, the total height of the burnish region (220) corresponds to the interval between the top slice (FIG. 3, 216a) and the bottom slice (FIG. 3, 216e) which comprise, respectively, the beginning and ending of the burnish region (220) alongside the slot inner mantle (214). Therefore, to determine the limits of the burnish region (220) it is sufficient to determine two slices from the entire population of slices (216a to e). The position of the top slice (216a) relative to the base plane (102) defines the upper burnish limit A, similarly, the position of the bottom slice (216e) relative to the base plane defines the lower burnish limit B; so that between A and B the slot profile is essentially constant and essentially minimal, i.e., the main property of the burnish region (220).

In some embodiments, the upper burnish limit A and the lower burnish limit B are determined using a statistical algorithm by selectively comparing FPGSs (218a to e) to each other, to groups of neighbouring FPGSs, and/or to the entire population of FPGSs.

Preferably, the method comprises the assignment of a parameter r to one FPGS. This parameter is preferably obtained by a step-wise comparison of the diameter of neighbouring FPGSs, starting from the FPGS at the proximal end P of the dimensional model (210) of the slot, and continuing towards the distal end D of the dimensional model (210) of the slot.

In some preferred embodiments, a parameter R related to the size of a FPGS (e.g. 218c), for example the width or diameter is compared either between neighbouring FPGSs (218b and 218d) or within the entire population of all FPGSs (218a, b, d, e). In some preferred embodiments, a reference slice with index r (e.g. 216d) is obtained from the FPGSs (e.g. 218d) by comparing a parameter R related to the size (e.g. radius) of the FPGS either between neighbouring FPGSs (218b and 218d) or within the entire population of all other FPGSs (218a, b, d, e). The reference slice is disposed at an end of the burnish region. In some preferred embodiments, an FPGS (e.g. 218) are compared with one or more other FPGSs. For instance, the FPGSs may be compared as pairwise neighbours or as an entire population of FPGSs (218).

In some preferred embodiments, the determining comprises starting from a slice (e.g. 216a) at the proximal end (P), and moving towards the distal end (D), and continuing as long as the parameter R in respect of the present FPGS (e.g. 218b) is smaller than the parameter R of the previous FPGS (e.g. 218a), optionally wherein said present slice (216b) is labelled as a reference slice with index r.

For example, whenever the diameter from the following FPGS (218b) is found to decrease relative to the previous FPGS (218a) the comparison continues, yet, as soon as a diameter is found to increase the comparison stops and the first FPGS (218) whose diameter is found to have increased is assigned an index r, defined as FPGSr. In a further embodiment each of the FPGS below the FPGSr, i.e., closer to D, are discarded. (i.e., the discarded FPGS may make up the break-out zone).

In some embodiments, each of the FPGS above the FPGSr, i.e., closer to P, are assigned a parameter R related to the width of the respective FPGS (218), for example, the radius or the diameter. Afterwards, the FPGS may be grouped into pairs of neighbouring FPGS, and their respective average standard deviation and average radius are computed and/or retrieved.

In some embodiments any method may be used, statistical or otherwise. In some preferred embodiments, a statistical method is performed to assess the goodness of fit, i.e., variance, between the slices (216), i.e., measured values, and the FPGS (218), i.e., fitted values. More preferably, this is a chi-squared test, most preferably the difference between the mutual radiuses is tested while assuming a normal distribution of the (radial) noise on the laser output.

In general, the chi-squared test is the standard approach to determining whether two subpopulations likely belong to the same larger population; specifically, if the diameters of two neighbouring FPGS can be considered to be similar, i.e., if the slot diameter is essentially constant in this vicinity.

Preferably, the radius or diameter of the FPGS pair is compared to the local average standard deviation skA of the measured points to the FPGS, or some other reference value for standard deviation. In some preferred embodiments, the method comprises evaluating the FPGSs (218) from the FPGS (218) with index r to the proximal end (P) and calculating the Outlierness for each FPGS (218).

In some preferred embodiments, the step of calculating the Outlierness for each FPGS (218), preferably wherein the Outlierness of a FPGS (218) with index k is calculated as the ratio between the difference in parameter R related to the size of the FPGS (218) between a FPGS (218c) with index k and a neighbouring FPGS (218b) with index k-1 to some reference value for the standard deviation skA of the distance of the measured points to the FPGS (218):

$$\text{Outlierness} = (R[k\text{-}1]\text{-}R[k])/skA.$$

In some embodiments, the Outlierness is calculated first for the FPGS pair that includes the FPGSr and the nearest neighbouring FPGS closest towards the P side. The obtained Outlierness value may then be compared to a threshold value, preferably defined by the user. The threshold value must be determined from experience or simulations gained from tests on representative workpiece materials, slot production techniques and measurement devices. In some embodiments, the value of the threshold may be chosen with respect to the defined height of slices (216). For example, for a height of slices set at 0.05 mm the threshold value could be set on 0.75.

In some embodiments, the value of the Outlierness is compared to the threshold value to determine the FPGS corresponding to the upper burnish limit *A, i.e.,* the top of the burnish region (220), and the lower burnish limit *B, i.e.,* the bottom of the burnish region (220).

In some preferred embodiments, the first FPGS (218) to have an Outlierness greater than a positive predefined threshold is labelled as the FPGS (218) with upper burnish limit A as measured from the base plane (102). In some preferred embodiments, the method comprises evaluating the FPGSs (218) from the proximal end (P) to the distal end (D) and calculating the Outlierness for each FPGS (218), for example starting from the FPGS (218) with upper burnish limit A. In some preferred embodiments, the first FPGS (218) to have an Outlierness smaller (i.e., more negative) than a predefined negative threshold is labelled as the FPGS (218) with lower burnish limit B as measured from the base plane (102).

For example, if the value of the Outlierness is greater than the threshold value, then FPGSr is accepted as the top of the burnish region (220) corresponding to the upper burnish limit *A.* If the value of the Outlierness is smaller than the threshold value, then this FPGS pair is discarded and a new Outlierness value is calculated for the next FPGS pair towards *P*; this process is repeated until a suitable, greater Outlierness value is found. Once the upper burnish limit A has been established, a similar process of comparing FPGS pairs is performed in the opposite direction, towards *D*; However, this time the Outlierness is compared to the negative threshold value (i.e., minus threshold). If the value of the Outlierness is smaller (i.e., more negative) than the negative threshold value, then the FPGS is accepted as the bottom of the burnish region corresponding to the lower burnish limit *B*. If the value of the Outlierness is greater (i.e., less negative) than the negative threshold value, then this FPGS pair is discarded and a new Outlierness value is calculated for the next FPGS pair towards *D*. Once both A and B have been determined the results of slot size inspection may be reported.

In some embodiments, the values of A and B are retrieved by a storage system and reported back to the user. The burnish region (220) has thus been determined automatically. Thereafter the user is free to choose whether to proceed with the automatically determined values or to perform another inspection of his choosing within the region of interest. Knowledge of the burnish dimension can be used to verify or improve product quality by optimizing the production technique, the workpiece material, and so on.

In some embodiments, the obtained upper A and lower B limits corresponding to the burnish region (220) of an inspected slot (110) are stored. The values are used in the inspection of subsequent slots to limit inspection to the same region defined by the stored values. Optionally, the obtained upper and lower limits may be used for a plurality of subsequent slot inspections. The subsequent slots may be disposed on the same workpiece.

An advantage of this method is that scanning times performed on a very large number of slots produced on a very large number of workpieces can be optimised, thereby decreasing significantly slot inspection times and costs.

The invention also relates to a method for inspecting a workpiece (100), the workpiece (100) comprising a plurality of slots (110), comprising the steps of: performing the method as described herein on a first slot to obtain the burnish region (220) of the first slot; and inspecting the profile of one or more other slots (110) of the plurality of slots (110) at a depth that falls within the burnish region determined for the first slot.

The slots of the plurality of slots may have similar characteristics, such as similar depth and similar diameter. The one or more slots may be one or more slots other than the first slot. The plurality of slots may be disposed on the same workpiece. By determining the burnish region for the first slot, inspection of the one or more slots can proceed rapidly since only the profile is measured at a depth that corresponds to the burnish region of the first slot.

In some preferred embodiments, a plurality of workpieces (100) is inspected, each workpiece (100) comprising a plurality of slots (110), further comprising the steps of inspecting the profile of at least one slot (110) in the plurality of slots (110) in the plurality of workpieces (100) at a depth that falls within the burnish region.

**FIG. 7** is an exemplary flow chart (300) of a method of the invention depicting steps from from a method starting point (302) to a method finishing point (324). Dimensional data from a model of a least part of the slot is received (304). A base plane is determined from the dimensional data, or a nominal base plane is used (306). A slot axis is determined from the from dimensional data, or a nominal slot axis is used (308). The dimensional data is divided (310) into entry region and inner mantle. In a slicing/fitting step (312), the inner mantle is subdivided into slices; for each slice (k=0, 1,...) the following steps apply

- fit a plane geometric shape (*e.g.* circle) to the data in slice k;
- store the radius $R_k$ of the fitted circle;
- store the standard deviation $s_k$ of the distance between the fitted circle and the data in slice k.

The population of circle radii $R_k$ and standard deviations $s_k$ for the slices is stored (314).

The position of reference slice r is determined (316) by advancing, from proximal end to distal end, to the slice k where the slice radius stops diminishing; in other words starting from slice k=0, k is incremented as long as $R_{k+1} < Rk$, then r=k is set so defining the position of reference slice r.

The upper burnish limit A is determined (318) by starting from the reference slice r, moving towards the proximal end and performing a chi-squared test on pairs of consecutive slices to determine if radius $R_k$ is significantly larger than radius $R_{k+1}$. The first slice for which $R_k$ is significantly larger than $R_{k+1}$ defines the upper burnish limit A.

The lower burnish limit B is determined (320) by starting from the reference slice r, moving towards the distal end and performing a chi-squared test on pairs of consecutive slices to determine if radius $R_{k+1}$ is significantly larger than radius $R_k$. The first slice for which $R_{k+1}$ is significantly larger than $R_k$ defines the lower burnish limit B.

The upper burnish limit (A) and lower burnish limit (B) are stored. The burnish region limits A, B determine the burnish region (220).

The invention also relates to a system according to claim 14 for inspecting for a workpiece (100), the system comprising a laser scanner and a computer, wherein the system is configured for performing any one of the methods as described above.

The invention also relates to a system for determining a burnish region (220), comprising a computer, wherein the system is configured for performing any one of the methods as described above. As used herein the term "user" refers to a person performing an action involving an embodiment of the disclosed invention. As used herein the term "computer" refers to a hardware system capable of performing a method described herein; it may comprise a processor or it may be an embedded system.

The invention also relates to a computing device or system configured for performing any one of the methods as described above. The system may comprise circuitry configured performing the method of the invention. Typically the circuitry comprises a processor and a memory. In some embodiments, the system comprises:

(1) a hardware system to measure the external surface of a slot's inner mantle (214) located on a workpiece, and (2) a software system to process the captured measurement data, which comprises the following steps: (a) storing data points representing the measured parameters of the external surface of the slot's inner mantle (214) into a matrix, (b) forming a dimensional model (210) of the slot surface based on the point cloud from the individual data points, (c) organizing the point cloud into groups, named 'slices', based on user defined parameters, (d) processing the data from individual slices, slice pairs, the total of slices, and/or a combination thereof, using statistical algorithms to determine the two slices that represent the upper and lower limits of the burnish region, and (e) reporting the measured values of the two slices corresponding to the upper and lower limits of the burnish region and diameter, and (f) optionally, forwarding the data obtained from step (e) back to the hardware system to narrow down the selected measurement region for subsequent slots.

In a further embodiment this invention may contain additional hardware and software to automate a series of slot inspections from a plurality of workpieces.

The invention also relates to a computer program or computer program product according to claim 15 having instructions which when executed by a computing device or system cause the computing device or system to perform any one of the methods as described above, or to perform each of the steps of any one of the methods as described above.

The invention also relates to a computer readable medium having stored thereon a computer program or computer program product as described above.

The invention also relates to a computer readable medium having stored thereon instructions which when executed by a computing device or system cause the computing device or system to perform any one of the methods as described above, or to perform each of the steps of any one of the methods as described above.

The invention also relates to a data stream which is representative of a computer program or computer program product as described above.

The invention also relates to a data stream which is representative of a computer program or computer program product having instructions which when executed by a computing device or system cause the computing device or system to perform any one of the methods as described above, or to perform each of the steps of any one of the methods as described above.

**Claims**

1. A method for inspecting for a workpiece (100), the workpiece (100) comprising a slot (110) with a proximal end (P) and a distal end (D), the method comprising:

- receiving a dimensional model (210) of at least part of the workpiece comprising at least part of the slot (110); and
- determining a burnish region (220) of the slot (110) that is a continuous region having an essentially constant profile from the dimensional model (210)

wherein determining the burnish region (220) comprises:

- defining in the dimensional model (210) an entry region (212), and an inner mantle (214) from the dimensional model (210), wherein the entry region (212) is located at the proximal end (P) of the slot; and the inner mantle (214) is distal to the entry region (212), wherein the inner mantle (214) is used to identify the burnish region (220), - subdividing the inner mantle (214) into a plurality of slices (216) along the slot axis (114) each of a predetermined height, wherein for at least two slices, preferably all slices (216a to 216e) a plane geometric shape (218a to 218e), preferably a circle, is generated and fitted to each of the respective slices (216a to 216e), preferably wherein the fitted plane geometric shapes (FPGSs) (218a to 218e) are each disposed essentially perpendicular to the slot axis (114), and preferably wherein the fitted plane geometric shapes (FPGSs) (218a to 218e) are each fitted inside a peripheral boundary of the respective slices (216a to 216e).

2. The method according to claim 1, wherein one or more properties of the burnish region (220) include dimension of the burnish region (220).

3. The method according to any one of claims 1 or 2, wherein one or more properties of the burnish region (220) include position of the burnish region (220).

4. The method according to any one of the preceding claims, wherein the slot (110) is an essentially cylindrical slot, preferably comprising a slot axis (114) that is a central longitudinal axis.

5. The method according to any one of the preceding claims, wherein the step of determining the burnish region (220) further comprises determining from the dimensional model (210) an upper burnish limit $A$ and a lower burnish limit $B$ measured from a base plane (102) that contacts the opening to the slot at the proximal end, between which upper burnish limit $A$ and lower burnish limit $B$ the slot profile is essentially constant and essentially minimal compared with a remainder of the slot (110).

6. The method according to any one of claims 1 to 5, wherein a parameter $R$ related to the size of a FPGS (218c), is compared either between neighbouring FPGSs (218b or d) or within the entire population of all FPGSs (218a to 218e), and wherein a reference slice with index $r$ is obtained from the FPGSs (218d) by comparing a parameter $R$ related to the size of the FPGS (218).

7. The method according to any one of claims 1 to 6, wherein the FPGS (218) are evaluated either sequentially against one or more other FPGSs (218) or as an entire population of FPGSs (218).

8. The method according to any one of claims 1 to 7, wherein the step of determining a burnish region (220) comprises starting from a slice (216) at the proximal end (P), and moving towards the distal end (D), and continuing as long as the parameter $R$ in respect of the present FPGS (218) is smaller than the parameter $R$ of the previous FPGS (218), optionally wherein said present slice (216) is labelled as a reference slice with index r.

9. The method according to claim 8, comprising the step of calculating the *Outlierness* for each FPGS (218), preferably wherein the *Outlierness* of a FPGS (218) with index $k$ is calculated as the ratio between the difference in parameter $R$ related to the size of the FPGS (218) between a neighbouring FPGS (218b) with index $k-1$ and the current FPGS (218c) with index $k$ to some reference value of the standard deviation $skA$ of the distance of the measured points to the FPGS (218):

$$Outlierness = (R[k-1]-R[k])/skA;$$

preferably comprising the step of evaluating the FPGSs (218) from the FPGS (218) with index $r$ to the proximal end (P) and calculating the Outlierness for each FPGS (218); wherein the first FPGS (218) to have an Outlierness greater than a predefined positive threshold is labelled as the FPGS (218) with upper burnish limit $A$ as measured from the base plane (102).

10. The method according to claim 9, comprising the step of evaluating the FPGSs (218) from the proximal end (P) to the distal end (D) and calculating the Outlierness for each FPGS (218), for example starting from the FPGS (218) with upper burnish limit *A*; wherein the first FPGS (218) to have an Outlierness smaller (i.e., more negative) than a predefined negative threshold is labelled as the FPGS (218) with lower burnish limit *B* as measured from the base plane (102).

11. The method according to claim 10, wherein the burnish region (220) is defined as the region between upper burnish limit *A* and lower burnish limit *B*.

12. The method according to any one of claims 1 to 11, further comprising the step of measuring the workpiece (100) with a dimensional measurement device (300) in order to generate the dimensional model (210), optionally wherein the dimensional measurement device (300) comprises a laser scanner and wherein the dimensional model (210) comprises a discrete set of data points.

13. The method for inspecting a workpiece (100), the workpiece (100) comprising a plurality of slots (110), comprising the steps of:

    - performing the method according to any one of claims 1 to 12 on a first slot to obtain the burnish region (220) of the slot; and
    - inspecting the profile of one or more slots (110) in the plurality of slots (110) at a depth that falls within the burnish region of the first slot.

14. A system for inspecting for a workpiece (100), the system comprising a computer configured for performing the method according to any one of claims 1 to 11, and a dimensional measurement device (300) for measurement of the workpiece (100) for generation of the dimensional model (210) of any one of claims 1 to 11.

15. A computer program or computer program product having instructions which when executed by a computing device or system cause the computing device or system to perform the method according to any of claims 1 to 11.

**Patentansprüche**

1. Verfahren zum Überprüfen für ein Werkstück (100), wobei das Werkstück (100) eine Nut (110) mit einem proximalen Ende (P) und einem distalen Ende (D) umfasst, wobei das Verfahren Folgendes umfasst:

    - Empfangen eines Dimensionsmodells (210) mindestens eines Teils des Werkstücks, das mindestens einen Teil der Nut (110) umfasst; und
    - Bestimmen eines Rollierbereichs (220) der Nut (110), der ein durchgehender Bereich ist, der ein im Wesentlichen konstantes Profil aufweist, aus dem Dimensionsmodell (210)

    wobei das Bestimmen des Rollierbereichs (220) Folgendes umfasst:

    - Definieren eines Eintrittsbereichs (212) in dem Dimensionsmodell (210) und eines inneren Mantels (214) aus dem Dimensionsmodell (210), wobei der Eintrittsbereich (212) an dem proximalen Ende (P) der Nut angeordnet ist; und sich der innere Mantel (214) distal zu dem Eintrittsbereich (212) befindet, wobei der innere Mantel (214) zum Identifizieren des Rollierbereichs (220) verwendet wird,
    - Unterteilen des inneren Mantels (214) in eine Mehrzahl von Scheiben (216) entlang der Nutachse (114) jeweils einer vorbestimmten Höhe, wobei für mindestens zwei Scheiben, vorzugsweise alle Scheiben (216a bis 216e), eine ebene geometrische Form (218a bis 218e), vorzugsweise ein Kreis, erzeugt und an jeder der jeweiligen Scheiben (216a bis 216e) eingepasst wird, vorzugsweise wobei die eingepassten ebenen geometrischen Formen (FPGSs) (218a bis 218e) jeweils im Wesentlichen senkrecht zu der Nutachse (114) angeordnet sind, und vorzugsweise wobei die eingepassten ebenen geometrischen Formen (FPGSs) (218a bis 218e) jeweils innerhalb einer Umfangsgrenze der jeweiligen Scheiben (216a bis 216e) eingepasst werden.

2. Verfahren nach Anspruch 1, wobei eine oder mehrere Eigenschaften des Rollierbereichs (220) eine Dimension des Rollierbereichs (220) umfassen.

3. Verfahren nach einem der Ansprüche 1 oder 2, wobei eine oder mehrere Eigenschaften des Rollierbereichs (220) eine Position des Rollierbereichs (220) umfassen.

4. Verfahren nach einem der vorhergehenden Ansprüche, wobei die Nut (110) eine im Wesentlichen zylindrische Nut ist, die vorzugsweise eine Nutachse (114) umfasst, die eine Längsmittelachse ist.

5. Verfahren nach einem der vorhergehenden Ansprüche, wobei der Schritt zum Bestimmen des Rollierbereichs (220) ferner Bestimmen, aus dem Dimensionsmodell (210), einer oberen Rolliergrenze A und einer unteren Rolliergrenze B, gemessen von einer Basisebene (102), die die Öffnung zu der Nut am proximalen Ende berührt, umfasst, wobei zwischen der oberen Rolliergrenze A und der unteren Rolliergrenze B das Nutprofil im Wesentlichen konstant und im Vergleich mit einem Rest der Nut (110) im Wesentlichen minimal ist.

6. Verfahren nach einem der Ansprüche 1 bis 5, wobei ein Parameter R in Bezug auf die Größe einer FPGS (218c) entweder zwischen benachbarten FPGSs (218b oder d) oder innerhalb der vollständigen Gesamtheit aller FPGSs (218a bis 218e) verglichen wird, und wobei eine Referenzscheibe mit Index r aus den FPGSs (218d) durch Vergleichen eines Parameters R in Bezug auf die Größe der FPGS (218) erhalten wird.

7. Verfahren nach einem der Ansprüche 1 bis 6, wobei die FPGS (218) entweder nacheinander gegenüber einer oder mehreren anderen FPGSs (218) oder als eine vollständige Gesamtheit von FPGSs (218) evaluiert werden.

8. Verfahren nach einem der Ansprüche 1 bis 7, wobei der Schritt zum Bestimmen eines Rollierbereichs (220) Ausgehen von einer Scheibe (216) an dem proximalen Ende (P) und Bewegen hin zu dem distalen Ende (D) und Fortfahren, solange der Parameter R in Bezug auf die gegenwärtige FPGS (218) kleiner als der Parameter R der vorherigen FPGS (218) ist, umfasst, optional wobei die gegenwärtige Scheibe (216) als eine Referenzscheibe mit Index r gekennzeichnet wird.

9. Verfahren nach Anspruch 8, umfassend den Schritt Berechnen des *Ausreißerbetrags* für jede FPGS (218), vorzugsweise wobei der *Ausreißerbetrag* einer FPGS (218) mit Index k als das Verhältnis zwischen der Differenz des Parameters R in Bezug auf die Größe der FPGS (218) zwischen einer benachbarten FPGS (218b) mit Index k-1 und der aktuellen FPGS (218c) mit Index k zu einem Referenzwert der Standardabweichung skA der Distanz der Messpunkte zu der FPGS (218) berechnet wird:

$$Ausrei\beta erbetrag = (R[k-1] - R[k])/skA;$$

vorzugsweise umfassend den Schritt Evaluieren der FPGSs (218) von den FPGS (218) mit Index r zu dem proximalen Ende (P) und Berechnen des Ausreißerbetrags für jede FPGS (218);
wobei die erste FPGS (218), die einen Ausreißerbetrag aufweist, der größer als ein vordefinierter positiver Schwellenwert ist, als die FPGS (218) mit der oberen Rolliergrenze A, gemessen von der Basisebene (102), gekennzeichnet wird.

10. Verfahren nach Anspruch 9, umfassend den Schritt Evaluieren der FPGSs (218) von dem proximalen Ende (P) zu dem distalen Ende (D) und Berechnen des Ausreißerbetrags für jede FPGS (218), zum Beispiel ausgehend von der FPGS (218) mit der oberen Rolliergrenze A; wobei die erste FPGS (218), die einen Ausreißerbetrag aufweist, der kleiner (d. h. mehr negativ) als ein vordefinierter negativer Schwellenwert ist, als die FPGS (218) mit einer unteren Rolliergrenze B, gemessen von der Basisebene (102), gekennzeichnet wird.

11. Verfahren nach Anspruch 10, wobei der Rollierbereich (220) als der Bereich zwischen der oberen Rolliergrenze A und der unteren Rolliergrenze B definiert wird.

12. Verfahren nach einem der Ansprüche 1 bis 11, ferner umfassend den Schritt Messen des Werkstücks (100) mit einer Dimensionsmessvorrichtung (300), um das Dimensionsmodell (210) zu erzeugen, optional wobei die Dimensionsmessvorrichtung (300) eine Laserabtastvorrichtung umfasst und wobei das Dimensionsmodell (210) einen diskreten Satz von Datenpunkten umfasst.

13. Verfahren zum Überprüfen eines Werkstücks (100), wobei das Werkstück (100) eine Mehrzahl von Nuten (110) umfasst, umfassend die folgenden Schritte:

   - Durchführen des Verfahrens nach einem der Ansprüche 1 bis 12 an einer ersten Nut, um den Rollierbereich (220) der Nut zu erhalten; und
   - Überprüfen des Profils einer oder mehrerer Nuten (110) in der Mehrzahl von Nuten (110) bei einer Tiefe, die in den Rollierbereich der ersten Nut fällt.

14. System zum Überprüfen für ein Werkstück (100), wobei das System einen Computer, der dazu ausgelegt ist, das Verfahren nach einem der Ansprüche 1 bis 11 durchzuführen, und eine Dimensionsmessvorrichtung (300) zur Messung des Werkstücks (100) zur Erzeugung des Dimensionsmodells (210) nach einem der Ansprüche 1 bis 11 umfasst.

15. Computerprogramm oder Computerprogrammprodukt, das Anweisungen aufweist, die, wenn sie durch eine Computervorrichtung oder ein System ausgeführt werden, die Computervorrichtung oder das System veranlassen, das Verfahren nach einem der Ansprüche 1 bis 11 durchzuführen.

**Revendications**

1. Procédé d'inspection pour une pièce à usiner (100), la pièce à usiner (100) comprenant une fente (110) avec une extrémité proximale (P) et une extrémité distale (D), le procédé comprenant :

   - la réception d'un modèle dimensionnel (210) d'au moins une partie de la pièce à usiner comprenant au moins une partie de la fente (110) ; et
   - la détermination d'une région de brunissage (220) de la fente (110), qui est une région continue ayant un profil essentiellement constant, à partir du modèle dimensionnel (210)
   dans lequel la détermination de la région de brunissage (220) comprend :

      - la définition, dans le modèle dimensionnel (210), d'une région d'entrée (212), et d'une enveloppe intérieure (214), à partir du modèle dimensionnel (210), dans lequel la région d'entrée (212) est située à l'extrémité proximale (P) de la fente ; et l'enveloppe intérieure (214) est distale à la région d'entrée (212), dans lequel l'enveloppe intérieure (214) est utilisée pour identifier la région de brunissage (220),
      - la sous-division de l'enveloppe intérieure (214) en une pluralité de tranches (216) le long de l'axe de fente (114), chacune d'une hauteur prédéterminée, dans lequel, pour au moins deux tranches, de préférence pour toutes les tranches (216a à 216e), une forme géométrique de plan (218a à 218e), de préférence un cercle, est générée et ajustée à chacune des tranches respectives (216a à 216e), de préférence dans lequel les formes géométriques de plan ajustées (FPGSs) (218a à 218e) sont chacune disposées de façon essentiellement perpendiculaire à l'axe de fente (114), et, de préférence, dans lequel les formes géométriques de plan ajustées (FPGSs) (218a à 218e) sont chacune ajustées à l'intérieur d'une frontière périphérique des tranches respectives (216a à 216e).

2. Procédé selon la revendication 1, dans lequel une ou plusieurs propriétés de la région de brunissage (220) incluent une dimension de la région de brunissage (220).

3. Procédé selon l'une quelconque des revendications 1 ou 2, dans lequel une ou plusieurs propriétés de la région de brunissage (220) incluent une position de la région de brunissage (220).

4. Procédé selon l'une quelconque des revendications précédentes, dans lequel la fente (110) est une fente essentiellement cylindrique, de préférence comprenant un axe de fente (114) qui est un axe longitudinal central.

5. Procédé selon l'une quelconque des revendications précédentes, dans lequel l'étape de la détermination de la région de brunissage (220) comprend en outre la détermination, à partir du modèle dimensionnel (210), d'une limite de brunissage supérieure $A$ et d'une limite de brunissage inférieure $B$, mesurées à partir d'un plan de base (102) qui entre en contact avec l'ouverture de la fente à l'extrémité proximale, entre lesquelles limite de brunissage supérieure $A$ et limite de brunissage inférieure $B$ le profil de fente est essentiellement constant et essentiellement minimal par rapport à un reste de la fente (110).

6. Procédé selon l'une quelconque des revendications 1 à 5, dans lequel un paramètre $R$ connexe à la taille d'une FPGS (218c), est comparé soit entre des FPGSs voisines (218b ou d) soit à l'intérieur de la population entière de toutes les FPGSs (218a à 218e), et dans lequel une tranche de référence avec l'indice $r$ est obtenue à partir des FPGSs (218d) en comparant un paramètre $R$ connexe à la taille de la FPGS (218).

7. Procédé selon l'une quelconque de claims 1 à 6, dans lequel les FPGSs (218) sont évaluées soit séquentiellement par rapport à une ou plusieurs autres FPGSs (218) soit en tant que population entière de FPGSs (218).

8. Procédé selon l'une quelconque des revendications 1 à 7, dans lequel l'étape de la détermination d'une région de brunissage (220) comprend le démarrage à partir d'une tranche (216) à l'extrémité proximale (P), et le déplacement vers l'extrémité distale (D), et la continuation aussi longtemps que le paramètre *R* en ce qui concerne la présente FPGS (218) est inférieur au paramètre *R* de la FPGS précédente (218), optionnellement dans lequel ladite présente tranche (216) est qualifiée comme étant tranche de référence avec l'indice *r*.

9. Procédé selon la revendication 8, comprenant l'étape du calcul de *l'Aberration* pour chaque FPGS (218), de préférence dans lequel *l'Aberration* d'une FPGS (218) avec l'indice *k* est calculée comme étant le rapport entre la différence de paramètre *R* connexe à la taille de la FPGS (218) entre une FPGS voisine (218b) avec l'indice *k-1* et la FPGS actuelle (218c) avec l'indice *k* et une certaine valeur de référence de l'écart type *skA* de la distance des points mesurés par rapport à la FPGS (218) :

$$Aberration \ = \ (R[k\text{-}1]\text{-}R[k])/skA \ ;$$

de préférence comprenant l'étape de l'évaluation des FPGSs (218) à partir de la FPGS (218) avec l'indice r jusqu'à l'extrémité proximale (P) et le calcul de *l'Aberration* pour chaque FPGS (218) ;
dans lequel la première FPGS (218) qui a une *Aberration* supérieure à un seuil positif prédéfini est qualifiée comme étant la FPGS (218) avec la limite de brunissage supérieure *A* telle que mesurée à partir du plan de base (102).

10. Procédé selon la revendication 9, comprenant l'étape de l'évaluation des FPGSs (218) à partir de l'extrémité proximale (P) jusqu'à l'extrémité distale (D) et le calcul de *l'Aberration* pour chaque FPGS (218), par exemple en commençant à partir de la FPGS (218) avec la limite de brunissage supérieure *A* ; dans lequel la première FPGS (218) qui a une *Aberration* inférieure (à savoir, plus négative) à un seuil négatif prédéfini est qualifiée comme étant la FPGS (218) avec la limite de brunissage inférieure *B* telle que mesurée à partir du plan de base (102).

11. Procédé selon la revendication 10, dans lequel la région de brunissage (220) est définie comme étant la région entre la limite de brunissage supérieure *A* et la limite de brunissage inférieure *B*.

12. Procédé selon l'une quelconque des revendications 1 à 11, comprenant en outre l'étape de la mesure de la pièce à usiner (100) avec un dispositif de mesure dimensionnelle (300) afin de générer le modèle dimensionnel (210), optionnellement dans lequel le dispositif de mesure dimensionnelle (300) comprend un dispositif de balayage laser et dans lequel le modèle dimensionnel (210) comprend un ensemble discret de points de données.

13. Procédé pour inspecter une pièce à usiner (100), la pièce à usiner (100) comprenant une pluralité de fentes (110), comprenant les étapes de :

- la réalisation du procédé selon l'une quelconque des revendications 1 à 12 sur une première fente pour obtenir la région de brunissage (220) de la fente ; et
- l'inspection du profil d'une ou de plusieurs fentes (110) dans la pluralité de fentes (110) à une profondeur qui est à l'intérieur de la région de brunissage du premier fente.

14. Système d'inspection pour une pièce à usiner (100), le système comprenant un ordinateur configuré pour réaliser le procédé selon l'une quelconque des revendications 1 à 11, et un dispositif de mesure dimensionnelle (300) pour mesurer la pièce à usiner (100) pour générer le modèle dimensionnel (210) de l'une quelconque des revendications 1 à 11.

15. Programme d'ordinateur ou produit programme d'ordinateur ayant des instructions qui, lorsqu'elles sont exécutées par un dispositif ou système informatique, font en sorte que le dispositif ou système informatique réalise le procédé selon l'une quelconque des revendications 1 à 11.

EP 3 715 782 B1

**FIG. 1**

**FIG. 2**

18

**FIG. 3**

**FIG. 4**

**FIG. 5**

**FIG. 6**

302 — Start

300

304 — Receive dimensional data

306 — Determine / use nominal base plane

308 — Determine / use nominal slot axis

310 — Divide dimensional data into entry region and inner mantle

312 —
For each slice (k=0,1,...):
- Fit a plane geometric shape (*e.g.* circle) to the data in slice k.
- Store radius $R_k$ of the fitted circle.
- Store standard deviation $s_k$ of the distance between the fitted circle and the data in slice k

314 — Store the population of circle radii $R_k$ and standard deviations $s_k$ for slices

316 — Determine the position of reference slice r: starting from slice k=0, increase k as long as $R_{k+1} < R_k$. Set r=k.

318 — Determine the upper burnish limit A using chi-squared test on pairs of consecutive slices. The slice where $R_k$ is significantly larger than $R_{k+1}$ defines the upper burnish limit A.

320 — Determine the lower burnish limit B using chi-squared test on pairs of consecutive slices. The slice where $R_{k+1}$ is significantly larger than $R_k$ defines the lower burnish limit B.

322 — Store upper burnish limit A and lower burnish limit B

324 — End

**FIG. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20170066768

- US 20140157610 A

**Non-patent literature cited in the description**

- **GREBAN et al.** Influence of the structure of blanked materials upon the blanking quality of copper alloys. *Journal of Materials Processing Technology,* 2007, vol. 186 (1-3), 27-32

- **TEKINER Z et al.** An experimental study for the effect of different clearances on burr, smooth-sheared and blanking force on aluminum sheet metal. *Materials and Design,* 2006, vol. 27 (10), 1134-1 138